# EUROPÄISCHE PATENTSCHRIFT

(11) **EP 3 198 116 B1**
(45) Veröffentlichungstag und Bekanntmachung des Hinweises auf die Patenterteilung: **29.04.2020**
(21) Anmeldenummer: 15767526.5
(22) Anmeldetag: 25.09.2015
(51) Int. Cl.: E21B 49/08, G01N 1/20

(54) **VORRICHTUNG ZUR AUFNAHME EINER PROBE**
DEVICE FOR RECEIVING A SAMPLE
DISPOSITIF DE RÉCEPTION D'UN ÉCHANTILLON

(30) Priorität: 26.09.2014 DE 102014114041
(43) Veröffentlichungstag der Anmeldung: 02.08.2017
(73) Patentinhaber: Leutert, Sebastian, 24103 Kiel (DE)
(72) Erfinder: Leutert, Sebastian, 24103 Kiel (DE)
(74) Vertreter: Hauck Patentanwaltspartnerschaft mbB
(86) Internationale Anmeldenummer: PCT/EP2015/072089
(87) Internationale Veröffentlichungsnummer: WO 2016/046363

(56) Entgegenhaltungen:
- WO-A1-2012/054038
- US-A- 5 662 166
- US-A1- 2006 137 479
- US-A1- 2007 236 215

## Beschreibung

Die vorliegende Erfindung betrifft eine Vorrichtung zur Aufnahme einer Probe.

Bei der Probenahme aus Öl- und Gasbohrungen ist bekannt, dass die in der Tiefe gewonnene Probe unter hohem Druck im Vergleich zum Umgebungsdruck und bei einer deutlich erhöhten Temperatur steht. Bei solchen geologisch herrschenden Drücken ist Gas beispielsweise in Öl gelöst, so dass das geförderte Fluid anfänglich in einer einheitlichen Phase vorliegt. Durch Druck- und Temperaturänderungen kann das gelöste Gas sich jedoch trennen und es entsteht ein zwei-phasiges Fluid mit getrennter Gas- und Ölphase. Ebenfalls führen die hohen Temperaturen bei der Probenahme zu Volumenänderungen in der Probe, wenn diese an die Oberfläche gelangt.

Es ist bekannt, Vorrichtungen zur Aufnahme einer Probe zu verwenden, bei denen keine Phasentrennung erfolgt, sondern die genommene Probe in einer Phase verbleibt und so transportiert werden kann. Grundsätzlich ist dabei der Ansatz, um eine Phasentrennung in der Probe zu vermeiden, mithilfe von Stickstoff (N₂) oder einem vergleichbaren Stoff oder Stoffgemisch eine Probenkammer unter Druck zu halten und die Phasentrennung zu vermeiden. Der gleiche Ansatz wird auch bei Probenehmern verwendet, um eine Phasentrennung bereits bei der Probenahme zu vermeiden.

Aus EP 0 515 495 B1 ist eine Vorrichtung zur Aufnahme einer Probe bekannt geworden, bei der über eine Einlassleitung die genommene Probe, sei es aus einem Probenehmer oder direkt aus der Bohrung, in eine Probekammer geleitet wird. Die Probekammer besitzt einen schwimmenden Kolben, der die Probekammer gegenüber einer Verdrängungskammer abschließt. Die Verdrängungskammer weist eine Verdrängungsflüssigkeit auf, in der Regel ein Wasser-Glykol-Gemisch.

Während des Befüllens der Probekammer wird über den schwimmenden Kolben die Verdrängungsflüssigkeit aus der Verdrängungskammer und aus der Vorrichtung verdrängt. Ist die Probekammer gefüllt, so kann eine Befüllung mit Stickstoff erfolgen. Eine Pufferkammer ist über einen zweiten schwimmenden Kolben von der Verdrängungskammer getrennt. In die Pufferkammer tritt dann Stickstoff ein und hält über den zweiten und den ersten schwimmenden Kolben einen Druck in der Probekammer aufrecht, der eine Phasentrennung verhindert.

Bei der bekannten Vorrichtung zur Aufnahme einer Probe befinden sich die Pufferkammer und die Verdrängungskammer vollständig in einem separaten zylindrischen Grundkörper der Vorrichtung, der ein von der Probekammer getrenntes Bauteil ist. Über ein endseitig aufgesetztes Anschlussteil kann die Probe in die Probekammer eingeleitet werden. Mit der Verwendung des zweiten Kolbens zwischen Verdrängungs- und Pufferkammer wird eine Mischung der Medien in den Kammern vermieden, jedoch kann eine Befüllung mit dem Pufferfluid immer erst dann erfolgen, wenn die Probe bereits genommen wurde. Bei einer falschen Stellung des zweiten Kolbens kann die Pufferwirkung des Puffergases dadurch verhindert werden, dass der Kolben zwischen Verdrängungs- und Pufferkammer an den Anschlag gedrückt wird.

Aus GB 2,252,296 A ist ebenfalls eine Vorrichtung zur Aufnahme und zum Transport einer Probe bekannt. Auch bei dieser Vorrichtung wird mit drei Kammern gearbeitet, wobei nur Probekammer und Verdrängungskammer über einen schwimmenden Kolben voneinander getrennt sind. Über den schwimmenden Kolben wird die Verdrängungsflüssigkeit aus der Vorrichtung verdrängt und anschließend Stickstoff in die Verdrängungskammer eingelassen, um über den schwimmenden Kolben die Probekammer unter Druck zu halten.Die bekannte Vorrichtung besitzt ein aufschraubbares Endteil, in dem die Stickstoffkammer ausgebildet ist.

Es ist zu berücksichtigen, dass die Vorrichtung zur Aufnahme einer Probe Bestandteil eines Systems zur Handhabung und Analyse der Probe ist. In der Regel wird die unter Druck stehende Vorrichtung zur Aufnahme der Probe in ein Analysegerät mit definierten Abmessungen gesetzt. Es besteht daher das Interesse daran, ohne Änderung der Außenabmessungen den Raum für die Stickstoffkammer in der Vorrichtung zur Aufnahme einer Probe zu vergrößern.

Aus US 2006/0137479 A1 ist ein Probennehmer bekannt geworden, bei dem ein Stickstoffgas zwischen einem Ladekolben und einem Trennkolben angeordnet ist. Durch Befüllen des Probennehmers über ein Einlassventil im unteren Kopfabschnitt wird durch die Probe der Ladekolben bewegt. Über ein Auslassventil am oberen Kopfende kann eine Bewegung des Trennkolbens zugelassen werden, so dass die aufgenommene Probe unter dem Druck des Stickstoffs steht.

Aus US 2007/0236215 A1 ist ein Probennehmer bekannt geworden, bei dem ein Pufferfluid durch einen Kolben bei der Aufnahme der Probe komprimiert wird. Hierdurch wird der notwendige Druck auf die Probe erzeugt.

Aus US 5,662,166 ist ein länglicher rohrförmiger Probennehmer bekannt geworden, bei dem eine Probenkammer, ein unter Druck stehendes Gasreservoir und ein evakuiertes Reservoir zur Verfügung stehen. Ein Kolben besitzt zwei druckaktivierte Dichtungen, die einander gegenüberliegen. Mit einer Zeitverzögerung wird ein inkompressibles Fluid in das evakuierte Reservoir geleitet, wodurch der Kolben sich bewegt. Durch die Bewegung des Kolbens werden eine Reihe von Vorgängen ausgelöst.

Die der Erfindung zugrundeliegende technische Aufgabe besteht darin, eine Vorrichtung zur Aufnahme einer Probe (Probenbehälter) bereitzustellen, bei dem in kontrollierter Art und Weise mit einem Puffergas ein Druck auf die Probe aufgebaut werden kann.

Die erfindungsgemäße Aufgabe wird durch eine Vorrichtung mit den Merkmalen aus Anspruch 1 gelöst. Vorteilhafte Ausgestaltungen bilden die Gegenstände der Unteransprüche.

Die erfindungsgemäße Vorrichtung ist ausgebildet und bestimmt zur Aufnahme einer Probe, die beispielsweise aus einem Probenehmer und/oder direkt aus einer Bohrung stammt. Die erfindungsgemäße Vorrichtung besitzt einen zylindrische Grundkörper und mindestens ein aufschraubbares Endteil. Der mit dem Endteil verschraubte Grundkörper besitzt Abmessungen, die denen von den herkömmlich bekannten Vorrichtungen zur Aufnahme einer Probe entsprechen. In dem Grundkörper ist eine Probekammer vorgesehen, die einen über ein Verschlussventil absperrbaren Probeeinlass und einen die Probekammer begrenzenden Verschiebungskolben aufweist. Ferner ist in dem Grundkörper eine Verdrängungskammer vorgesehen, die einen über ein Auslassventil absperrbaren Auslass aufweist. Verdrängungskammer und Probekammer sind gegeneinander über den Verschiebungskolben abgegrenzt. Eine Vergrößerung der Probekammer, beispielsweise durch eine eintretende Probe, führt mit der Bewegung des Verschiebungskolbens zu einer volumenmäßigen Verkleinerung der Verdrängungskammer. Ferner ist eine integrierte Pufferkammer vorgesehen, die über ein mit einem Verbindungsventil absperrbaren Auslass mit der Verdrängungskammer verbindbar ist. Über die Verbindung der Pufferkammer und der Verdrängungskammer kann beispielsweise eine geleerte Verdrängungskammer wieder mit Stickstoff oder einem anderen Puffermedium gefüllt werden.

Erfindungsgemäß ist das Endteil auf den Grundkörper aufschraubbar, wobei das Endteil in Längsrichtung aus dem Grundkörper vorsteht. Die Pufferkammer weist eine zylindrische Form auf, die mindestens in einem an den Grundkörper angrenzenden Abschnitt von der Innenwand des Grundkörpers begrenzt ist. Gegenüber den bekannten Lösungen schafft eine Pufferkammer, die radial nach außen von einer Innenwand des Grundkörpers begrenzt ist, ein relativ zur Länge der Flasche deutlich vergrößertes Volumen für das Puffermedium. Doppelte Wandstärken in radial nach außen weisender Richtung können hierbei vermieden werden.

Erfindungsgemäß sind Einlass-, Auslass- und Verbindungsventil in dem aufschraubbaren Endteil angeordnet. Ein oder mehrere Ventile in dem Endteil bieten den Vorteil, dass diese Ventile nahe zu der Pufferkammer liegen, so dass keine langen, Volumen benötigende Verbindungskanäle in der Vorrichtung angeordnet werden müssen.

Weiter bevorzugt sind die in dem Endteil angeordneten Ventile als innenliegende Ventile ausgebildet. Hierdurch können die äußeren Abmessungen der Vorrichtung ohne weiteres eingehalten werden. Ein weiterer Vorteil der innenliegenden Ventile ist, dass diese nicht beschädigt werden können.

Erfindungsgemäß besitzt die Pufferkammer einen ersten Abschnitt und einen zweiten Abschnitt. Der erste Abschnitt wird von der Innenwand des Grundkörpers in radialer Richtung nach außen begrenzt. Der Grund des ersten Abschnitts wird ebenfalls von dem Grundkörper gebildet. Endseitig gegenüber des Grundkörpers geht der erste Abschnitt in einen zweiten zylindrischen Abschnitt über, der von einer Innenwand des Endteils entlang seiner Umfangswand begrenzt ist. Bei der bevorzugten Ausgestaltung befindet sich die Pufferkammer mit ihrem größten Durchmesser im ersten Abschnitt innerhalb des Grundkörpers, während ein zweiter Abschnitt der Pufferkammer sich weitgehend vollständig in dem Endteil befindet. Die Pufferkammer wird in dieser Ausgestaltung sowohl von dem Grundkörper als auch von dem Endteil begrenzt.

Erfindungsgemäß weist das Endteil einen Stutzen auf, in dem ein Kanal die Verdrängungskammer mit dem Auslassventil verbindet. Der Stutzen ist bevorzugt mittig angeordnet. Erfindungsgemäß ist das freie Ende des Stutzens mit einem Außengewinde versehen, das mit einem korrespondierenden Innengewinde in dem Grundkörper verschraubbar ist. Der besondere Vorteil dieser Ausgestaltung liegt darin, dass an beiden Enden, bezogen auf die Längsrichtung, das Endteil mit dem Grundkörper verschraubt ist.

In einer bevorzugten Weiterbildung ist der Stutzen als ein separates Teil ausgebildet, das in dem Endteil verschraubt ist.

Das Endteil weist zum Verschrauben entlang seinem Umfang ein Außengewinde auf, über welches das Endteil mit dem Grundkörper verschraubbar ist.

Zudem entspricht der Außendurchmesser der Pufferkammer mindestens in dem an den Grundkörper angrenzenden Abschnitt dem Außendurchmesser der Verdrängungskammer und/oder der Probekammer. Verdrängungskammer und Probekammer sind vollständig in dem Grundkörper der erfindungsgemäßen Vorrichtung angeordnet. Für die Pufferkammer ist keine größere Wandstärke erforderlich, so dass hier mit gleichem Durchmesser für die Pufferkammer gearbeitet werden kann.

Ein bevorzugtes Ausführungsbeispiel der erfindungsgemäßen Vorrichtung wird nachfolgend näher erläutert. Es zeigen:
- Fig. 1: einen schematischen Aufbau mit Pufferkammer und Verdrängung skammer,
- Fig. 2: den vollständigen Aufbau einer Vorrichtung zur Aufnahme einer Probe in einer perspektivischen, teilweise transparenten Ansicht,
- Fig. 3: eine Draufsicht auf das Endteil in Längsrichtung,
- Fig. 4: einen Schnitt entlang der Linie C-C aus Fig. 6,
- Fig. 5: einen Schnitt entlang der Linie B-B aus Fig. 3 und
- Fig. 6: einen Schnitt entlang der Linie A-A aus Fig. 3.

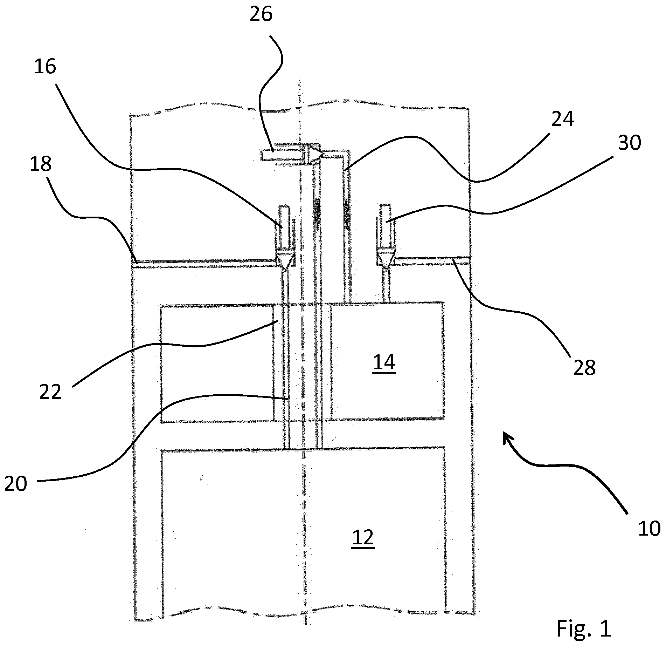

Fig. 1 zeigt in einer schematischen Ansicht einen Abschnitt der Vorrichtung zur Aufnahmen einer Probe (fluid probe), die nachfolgend auch Probenbehälter genannt wird. Der Probenbehälter 10 besitzt eine kreiszylindrische Form. In Fig. 1 zu erkennen ist die Verdrängungskammer 12, die über ein Auslassventil 16 mit einem Auslass 18 verbunden ist. Das Auslassventil 16 ist mit der Verdrängungskammer 12 über einen Kanal 20 verbunden, der durch einen zentralen Abschnitt 22 in der Pufferkammer 14 geführt ist.

Die Pufferkammer 14 ist über einen Verbindungskanal 24 mit der Verdrängungskammer 12 verbunden. In der Verdrängungskammer 24 sitzt ein Verbindungsventil 26, das den Verbindungskanal 24 zwischen der Pufferkammer 14 und der Verdrängungskammer 12 sperrt.

Die Pufferkammer 14 ist zudem über einen Einlasskanal 28 mit einem Ventil 30 verbunden.

Während des Betriebs wird beispielsweise ein Wasser-Glykol-Gemisch als Verdrängungsmedium aus der Verdrängungskammer 12 über die Kanäle 18 und 20 bei geöffnetem Auslassventil 16 verdrängt. Anschließend wird das Auslassventil 16 geschlossen und das Verbindungsventil 26 geöffnet, so dass beispielsweise Stickstoff als Pufferfluid über den Verbindungskanal 24 in die Verdrängungskammer 12 eintritt und den für die Probe notwendigen Druck auf den Kolben (nicht dargestellt) ausübt. Zum Befüllen der Pufferkammer 14 ist der Kanal 28 mit dem Einlassventil 30 vorgesehen.

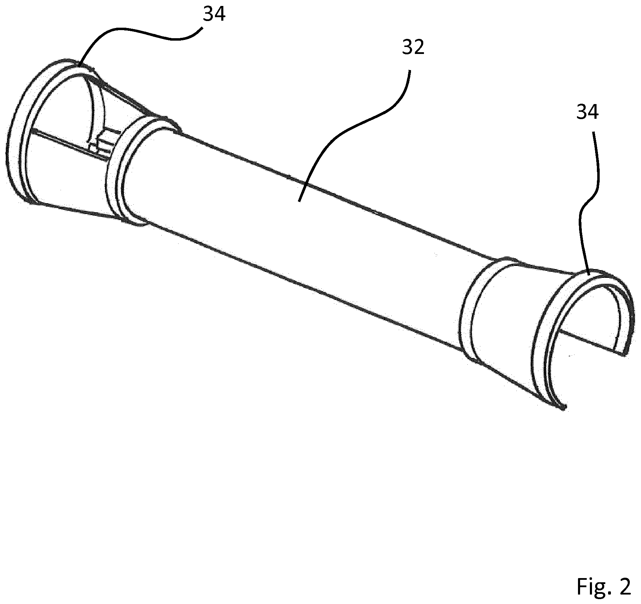

Fig. 2 zeigt in einer schematischen Ansicht die erfindungsgemäße Vorrichtung, die einen zylindrischen Körper 32 besitzt, der an seinen Enden konisch sich erweiternde Halte- und Transportabschnitte 34 aufweist. Für die erfindungsgemäße Vorrichtung ist es von entscheidender Bedeutung, dass die Abmessungen des zylindrischen Grundkörpers 32 unverändert sind. Auch die Halte- und Transportabschnitte 34 sind in ihrer Lage und ihren Abmessungen an die Vorrichtung für an Analysegerät angepasst, in das die Probe überführt und in dem sie analysiert werden kann.

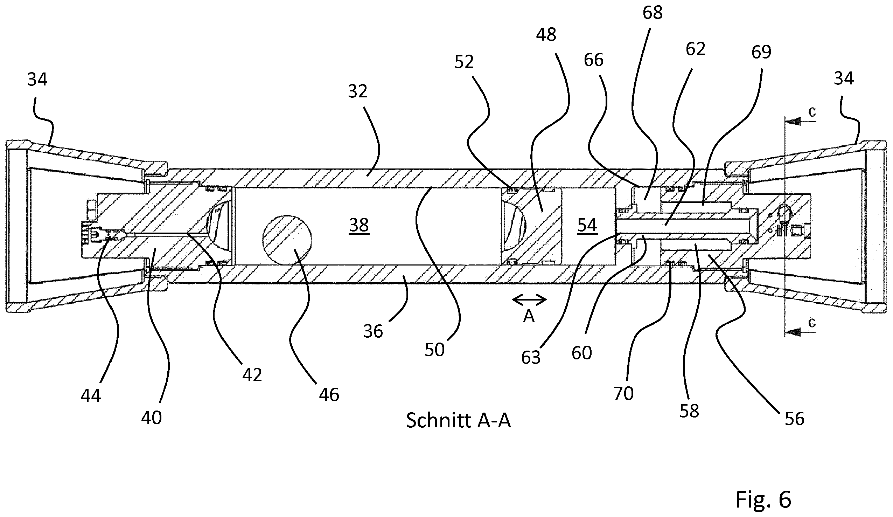

Der Aufbau der erfindungsgemäßen Vorrichtung wird an der Schnittzeichnung A-A in Fig. 6 deutlich. Fig. 6 zeigt einen zylindrischen Grundkörper 36 mit einer zylindrischen Probekammer 38. Die Probekammer 38 wird an einem Ende über ein einschraubbares Verschlussteil 40 verschlossen. Das Verschlussteil 40 besitzt einen Verbindungskanal 42 mit einem Verschlussventil 44. Über den Verbindungskanal 42 kann die entnommene Probe in die Probekammer 38 eingeführt werden. In der Probekammer 38 befindet sich eine Kugel 46, die für eine Vermischung der genommenen Probe sorgt.

In der Probekammer 38 angeordnet ist ein schwimmender Verschiebungskolben 48, der in Richtung des Doppelpfeils A beweglich in der Probekammer 38 angeordnet ist. Hierbei ist der Verschiebungskolben 48 entlang seinem Umfang gegenüber der Innenwand 50 durch Dichtungen 52 abgedichtet. Der schwimmende Verschiebungskolben 48 teilt von der Probekammer eine Verdrängungskammer 54 ab.

Auf der gegenüberliegenden Seite ist der zylindrische Grundkörper 36 durch ein Endteil 56 abgeschlossen. Das Endteil 56 besitzt einen zylindrischen Aufbau mit einer zentralen Ausnehmung 58. In der Ausnehmung 58 ist ein Stutzen 60 zentral angeordnet, in dem ein Verdrängungskanal 62 ausgebildet ist, über den die Verdrängungskammer 54 mit einem Auslass (nicht dargestellt) in Verbindung steht. Der Stutzen 60 ist selbst an seinem freien Ende 62 in dem Grundkörper 36 geschraubt und gegenüber diesem abgedichtet.

Zwischen Stutzen 60 und Innenwand 66 des Grundkörpers 36 befindet sich die Pufferkammer 68. Die Pufferkammer 68 ist in radialer Richtung nach innen von der Außenwand des Stutzens 60 begrenzt. In radialer Richtung auswärts ist die Pufferkammer 68 durch die Innenwand 66 des Grundkörpers 36 begrenzt. An den ersten Abschnitt der Pufferkammer 68 schließt sich ein zweiter Abschnitt 69 der Pufferkammer 68 an, der durch den in der Aussparung 58 freiliegenden Zylindermantel gebildet ist. Über Dichtungen 70 ist die Pufferkammer 68 gegenüber dem Endteil 56 abgedichtet.

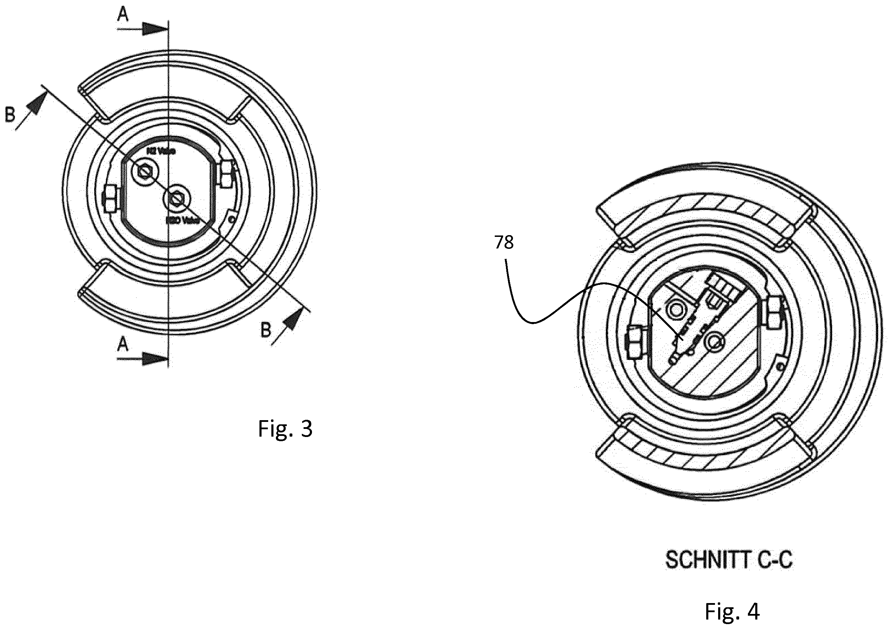

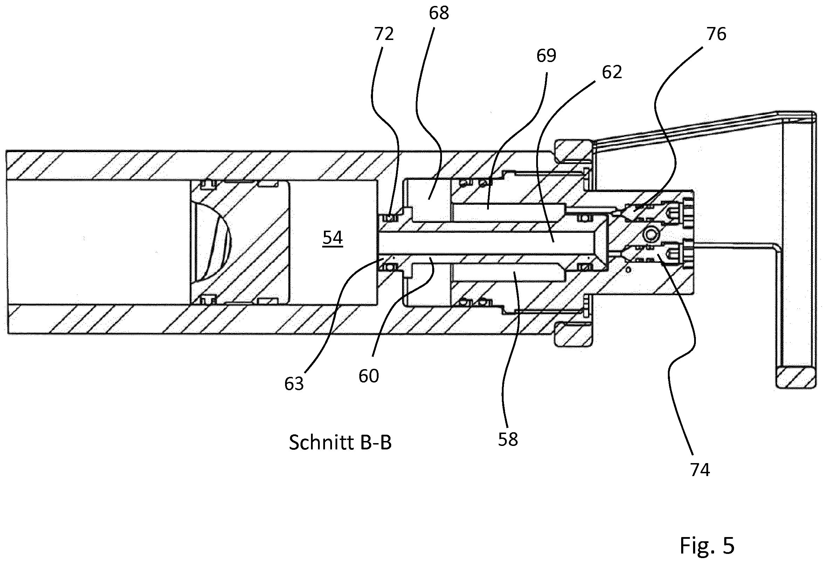

In dem in Fig. 5 dargestellten Schnitt B-B ist der Aufbau der Pufferkammer 68 deutlich zu erkennen. Das freie Ende 63 des Stutzens 60 ist in ein Innengewinde 72 in dem Grundkörper 36 geschraubt. Das andere Ende des Stutzens 60 ist in das Endteil 56 geschraubt, von wo aus der Verbindungskanal 62 mit dem Auslassventil 74 verbunden ist. In dem in Fig. 4 gezeigten Schnitt C-C ist das innenliegende Ventil 78 zu erkennen, mit dem die Pufferkammer 68 über den Kanal 62 mit der Verdrängungskammer 54 verbindbar ist.

### Bezugszeichenliste

- 10: Probenbehälter
- 12: Verdrängungskammer
- 14: Pufferkammer
- 16: Auslassventil
- 18: Auslass
- 20: Kanal
- 22: zentraler Abschnitt
- 24: Verbindungskanal
- 26: Verbindungsventil
- 28: Einlasskanal
- 30: Einlassventil
- 32: zylindrischer Grundkörper
- 34: Halte- und Transportabschnitte
- 36: zylindrischer Grundkörper
- 38: zylindrische Probekammer
- 40: Verschlussteil
- 42: Verbindungskanal
- 44: Verschlussventil
- 46: Kugel
- 48: Verschiebungskolben
- 50: Innenwand
- 52: Dichtungen
- 54: Verdrängungskammer
- 56: Endteil
- 58: Ausnehmung
- 60: Stutzen
- 62: Verdrängungskanal
- 63: Ende des Stutzens
- 66: Innenwand
- 68: Pufferkammer
- 69: zweiter Abschnitt der Pufferkammer
- 70: Dichtungen
- 72: Innengewinde
- 74: Auslassventil
- 76: innenliegendes Ventil

## Patentansprüche

1. Probenbehälter (10) mit
- einem zylindrischen Grundkörper (36) und einem aufschraubbaren Endteil,
- einer Probekammer (38) in dem Grundkörper (36), die einen über ein Verschlussventil (44) absperrbaren Probeneinlass und einen die Probekammer begrenzenden Verschiebungskolben aufweist,
- einer Verdrängungskammer (12, 54) in dem Grundkörper (36), die einen über ein Auslassventil (16) absperrbaren Auslass (18) aufweist, wobei die Verdrängungskammer (12, 54) gegen die Probekammer (38) über den Verschiebungskolben (48) abgegrenzt ist, und
- einer Pufferkammer (14, 68, 69), die über ein mit einem Verbindungsventil (26) absperrbaren Auslass mit der Verdrängungskammer (12, 54) verbindbar und über einen Einlasskanal (28) mit einem Einlassventil (30) befüllbar ist,
- die Pufferkammer (14, 68, 69) eine zylindrische Form aufweist, die in einem an den Grundkörper (36) angrenzenden Abschnitt in radialer Richtung nach außen von einer Innenwand des Grundkörpers (36) begrenzt ist, ein Verdrängungsmedium in der Verdrängungskammer (12, 54) vorgesehen ist und bei geöffnetem Auslassventil (16) verdrängt wird und ein Puffermedium in der Pufferkammer (14, 68, 69) vorgesehen ist, das bei geöffnetem Verbindungsventil (26) in die Verdrängungskammer (12, 54) eintritt und über den schwimmenden Kolben (48) auf die Probenkammer (38) wirkt,
**dadurch gekennzeichnet, dass**
- das Endteil auf den Grundkörper aufgeschraubt in Längsrichtung über diesen vorsteht,
- wobei die Pufferkammer (14, 68, 69) einen ersten Abschnitt und einen zweiten Abschnitt besitzt, wobei der erste Abschnitt die von der Innenwand des Grundkörpers (36) begrenzte Außenwand und einen an dem Grundkörper (36) ausgebildeten Grund aufweist und endseitig in dem zweiten Abschnitt der Pufferkammer (14, 68, 69) übergeht, der von einer Innenwand des Endteils (56) entlang seiner Umfangswand begrenzt ist und
- wobei Einlass-, Auslass- und Verbindungsventil in dem aufschraubbaren Endteil (56) angeordnet sind, das einen Stutzen (60) aufweist, in dem ein Kanal die Verdrängungskammer (12, 54) mit dem Auslassventil verbindet und dessen freies Ende ein Außengewinde aufweist, mit dem eine Verschraubung mit dem Grundkörper erfolgt.

2. Probenbehälter nach Anspruch 1, **dadurch gekennzeichnet, dass** die in dem Endteil (56) angeordneten Ventile als innenliegende Ventile ausgebildet sind, die nicht aus dem Endteil (56) vorstehen.

3. Probenbehälter nach Anspruch 1, **dadurch gekennzeichnet, dass** der Stutzen (60) als ein separates Teil ausgebildet ist, das in dem Endteil (56) verschraubt ist.

4. Probenbehälter nach einem der Ansprüche 1 und 2, **dadurch gekennzeichnet, dass** das Endteil (56) entlang seinem Umfang ein Außengewinde aufweist, mit dem eine Verschraubung mit dem Grundkörper (36) erfolgen kann.

5. Probenbehälter nach einem der Ansprüche 1 bis 4, **dadurch gekennzeichnet, dass** der Innendurchmesser der Pufferkammer (14, 68, 69) wenigstens in dem an dem Grundkörper (36) angrenzenden Abschnitt dem Innendurchmesser der Verdrängungskammer (12, 54) und/oder der Probekammer (38) entspricht.

## Claims

1. Sample container (10) with
- A main cylindrical body (36) and a screwable end part,
- a sample chamber (38) in the main body (36), which has a sample inlet which can be shut off via a closing valve (44) and a displacement piston delimiting the sample chamber,
- a displacement chamber (12, 54) in the main body (36), which has an outlet (18) which can be shut off via an outlet valve (16), the displacement chamber (12, 54) being separated from the sample chamber (38) by the reciprocating piston (48), and
- a buffer chamber (14, 68, 69) which can be connected to the displacement chamber (12, 54) via an outlet which can be shut off by a connecting valve (26) and which can be filled by an inlet channel (28) with an inlet valve (30),
- the buffer chamber (14, 68, 69) having a cylindrical shape, which in a section adjoining the main body (36) is delimited radially outwards by an inner wall of the main body (36), a displacement medium is provided in the displacement chamber (12, 54) and is displaced when the outlet valve (16) is opened and a buffer medium is provided in the buffer chamber (14, 68, 69) which enters the displacement chamber (12, 54) when the connecting valve (26) is opened and acts on the sample chamber (38) via the floating piston (48),
**characterized in that**
- the end part screwed onto the main body protrudes in longitudinal direction beyond it,
- wobei die Pufferkammer (14, 68, 69) einen ersten Abschnitt und einen zweiten Abschnitt besitzt, wobei der erste Abschnitt die von der Innenwand des Grundkörpers (36) begrenzte Außenwand und einen an dem Grundkörper (36) ausgebildeten Grund aufweist und endseitig in dem zweiten Abschnitt der Pufferkammer (14, 68, 69) übergeht, der von einer Innenwand des Endteils (56) entlang seiner Umfangswand begrenzt ist und
- wherein inlet, outlet and connecting valve are arranged in the screwable end part (56) which has a connecting piece (60) in which a channel connects the displacement chamber (12, 54) with the outlet valve and the free end of which has an external thread with which a screw connection with the main body is effected.

2. Sample container according to claim 1, **characterized in that** the valves arranged in the end part (56) are designed as internal valves which do not protrude from the end part (56).

3. Sample container according to claim 1, **characterized in that** the connecting piece (60) is formed as a separate part which is screwed onto the end part (56).

4. Sample container according to one of claims 1 and 2, **characterized in that** the end part (56) has an external thread along its circumference with which a screw connection with the main body (36) can be effected.

5. Sample container according to one of claims 1 to 4, **characterized in that** the inner diameter of the buffer chamber (14, 68, 69) at least in the section adjacent to the main body (36) corresponds to the inner diameter of the displacement chamber (12, 54) and/or the sample chamber (38).

## Revendications

1. Dispositif de réception d'un échantillon (10) avec
- un corps de base cylindrique (36) et une partie d'extrémité vissable,
- une chambre d'échantillon (38) dans le corps de base (36), laquelle présente une entrée d'échantillon verrouillable par une soupape de fermeture (44) et un piston de déplacement délimitant la chambre d'échantillon,
- une chambre de refoulement (12, 54) dans le corps de base (36), laquelle présente une sortie (18) verrouillable par une soupape de sortie (16), dans lequel la chambre de refoulement (12, 54) est délimitée par rapport à la chambre d'échantillon (38) par le piston de déplacement (48), et
- une chambre tampon (14, 68, 69) apte à être reliée à la chambre de refoulement (12, 54) par une sortie verrouillable par une soupape de raccordement (26) et apte à être remplie à l'aide d'une soupape d'admission (30) par le biais d'un canal d'admission (28),
- la chambre tampon (14, 68, 69) présente une forme cylindrique délimitée vers l'extérieur dans la direction radiale par une paroi intérieure du corps de base (36) dans une section adjacente au corps de base (36), un fluide de refoulement est présent dans la chambre de refoulement (12, 54) et est refoulé lorsque la soupape de sortie (16) est ouverte, et un fluide tampon est présent dans la chambre tampon (14, 68, 69) qui entre dans la chambre de refoulement (12, 54) lorsque la soupape de raccordement (26) est ouverte et agit sur la chambre d'échantillon (38) par le biais du piston flottant (48),
**caractérisé en ce que**
- la partie d'extrémité vissée sur le corps de base fait saillie longitudinalement au-delà de celui-ci,
- dans lequel la chambre tampon (14, 68, 69) possède une première section et une deuxième section, la première section présentant la paroi extérieure délimitée par la paroi intérieure du corps de base (36) et un fond formé sur le corps de base (36), et se prolongeant à son extrémité dans la deuxième section de la chambre tampon (14, 68, 69), laquelle est délimitée par une paroi intérieure de la partie d'extrémité (56) le long de sa paroi périphérique, et
- dans lequel les soupapes d'entrée, de sortie et de raccordement sont disposées dans la partie d'extrémité (56) vissable, laquelle présente une tubulure (60) dans laquelle un canal relie la chambre de refoulement (12, 54) à la soupape de sortie et dont l'extrémité libre présente un filetage extérieur permettant un vissage avec le corps de base.

2. Dispositif de réception d'un échantillon selon la revendication 1, **caractérisé en ce que** les soupapes disposées dans la partie d'extrémité (56) sont conçues comme des soupapes internes ne faisant pas saillie hors de la partie d'extrémité (56).

3. Dispositif de réception d'un échantillon selon la revendication 1, **caractérisé en ce que** la tubulure (60) est conçue comme une pièce séparée, vissée dans la partie d'extrémité (56).

4. Dispositif de réception d'un échantillon selon l'une des revendications 1 et 2, **caractérisé en ce que** la partie d'extrémité (56) présente un filetage extérieur le long de sa périphérie, permettant un vissage avec le corps de base (36) .

5. Dispositif de réception d'un échantillon selon l'une des revendications 1 à 4, **caractérisé en ce que** le diamètre intérieur de la chambre tampon (14, 68, 69) correspond au diamètre intérieur de la chambre de refoulement (12, 54) et/ou de la chambre d'échantillon (38), au moins dans la section adjacente au corps de base (36).
